# EUROPEAN PATENT APPLICATION

(11) **EP 2 821 513 A1**
(43) Date of publication of application: **07.01.2015**
(21) Application number: 13754888.9
(22) Date of filing: 30.01.2013
(51) Int. Cl.: C22B 11/00, B01J 20/20, B01J 20/34, C22B 3/24

(54) **METHOD FOR RECOVERING GOLD ADSORBED ON ACTIVATED CARBON AND GOLD MANUFACTURING PROCESS USING SAME**

(30) Priority: 01.03.2012 JP 2012045577; 16.11.2012 WO PCT/JP2012/079855
(71) Applicant: JX Nippon Mining & Metals Corporation, Tokyo 100-8164 (JP)
(72) Inventor: HATANO,Kazuhiro, Hitachi-shi Ibaraki 317-0056 (JP); KATSUKAWA,Koji, Hitachi-shi Ibaraki 317-0056 (JP); ONO,Eiki, Hitachi-shi Ibaraki 317-0056 (JP); SANO,Masaki, Hitachi-shi Ibaraki 317-0056 (JP)
(74) Representative: Yeadon, Mark
(86) International application number: PCT/JP2013/052101
(87) International publication number: WO 2013/129017

(57) **Abstract**

Gold adsorbed by activated carbon is efficiently recovered at low cost. The method of recovering gold comprises eluting gold adsorbed by activated carbon with an eluent prepared by adding thiosulfate to an acidic aqueous solution to obtain an acidic concentrated gold solution.

## Description

### Technical Field

The present invention relates to a method of recovering gold adsorbed on activated carbon, and a method of manufacturing gold using the method.

### Background Art

Gold is one of metals of great value and is present as simple fine particles in natural veins. In many cases, gold is not only included in a small amount as a byproduct in gold veins, but is also included in a small amount as a byproduct of pyrite, chalcopyrite, and other metal sulfide ores, and in many cases, the gold is separated in smelting of main components thereof and smelted to separate metal gold.

When gold produced with metal sulfide ore, for example, chalcopyrite is treated, the gold generally moves to an anode in the copper pyrometallurgical process and is then concentrated in electrolytic slime in an electrolytic refining process. The gold in the electrolytic slime is recovered as metal gold through a hydrometallurgical process(Patent Literatures 1 and 2) or a pyrometallurgical process.

Recently, smelting techniques have been studied to treat various metal concentrates through a hydrometallurgical process without using pyrometallurgical process in consideration of environmental burden and impurities in the concentrates, and a gold leaching method using strong acid with an oxidation potential sufficient for dissolving noble metal is proposed (Patent Literature 3) .

In many cases, the solution which contains gold dissolved with the acid in this manner is adsorbed onto an adsorbent and then concentrated. Activated carbon, functional resins, and the like are known as the adsorbent of gold, but activated carbon is the most common adsorbent having high versatility.

As a method of recovering gold adsorbed by activated carbon, there is a method in which the activated carbon is incinerated or eluted with a cyanide solution after the adsorption and the resulting eluent is subjected to electrowinning or chemical reduction (Patent Literature 3).

### Citation List

### Patent Literature

Patent Literature 1: JP 9-316561 A
Patent Literature 2: JP 2001-316735 A
Patent Literature 3: JP 2006-512484 A

### Summary of Invention

### Technical Problem

In the case in which the adsorbent is activated carbon as described above, when it is incinerated to recover gold, there is a problem in that the cost increases. Elution of adsorbed gold using cyanide has a problem in that the cyanide has toxicity.

When other adsorbents such as functional resins are used, the adsorption capacity and the adsorption rate of gold are excellent. However, since a functional group of the resin and the gold interact strongly with each other, there are no widespread methods appropriate for elution.

In the case of solvent extraction, extraction, settling, and back extraction facilities are necessary and the gold cannot be recovered selectively. Strips have a problem also in the solvent extraction of the gold, whereby a reduction method including reduction as crude metal with oxalic acid is generally used. However, there is a problem in that there is no gold selectivity upon reduction. Therefore, a gold concentrating method which can be more simply operated is preferred.

### Solution to Problem

The present inventors have constantly conducted studies for resolving the above-described problems, and as a result, found that when gold adsorbed on activated carbon is eluted using an eluent obtained by adding thiosulfate to an acidic aqueous solution, gold may be efficiently recovered at low cost.

According to an aspect of the invention that has been completed based on such research findings, a method of recovering gold includes: eluting gold adsorbed on activated carbon with an eluent prepared by adding thiosulfate to an acidic aqueous solution to obtain an acidic concentrated gold solution.

In an embodiment of the method of recovering gold according to the invention, a pH of the acidic aqueous solution is 4 to 7.

In another embodiment of the method of recovering gold according to the invention, the thiosulfate is a reductant including at least one selected from sodium thiosulfate, thiosulfuric acid, and potassium thiosulfate.

In a further embodiment of the method of recovering gold according to the invention, a concentration of the thiosulfate in the eluent is not less than 0.01 mol/L.

In a further embodiment of the method of recovering gold according to the invention, a concentration of the thiosulfate in the eluent is 0.01 to 1.0 mol/L.

In a still further embodiment of the method of recovering gold according to the invention, the elution is performed using a batch-type reactor at an elution temperature adjusted to 20 to 100°C.

In a still further embodiment of the method of recovering gold according to the invention, the elution temperature is adjusted to 60 to 85°C.

According to another aspect of the invention, a method of manufacturing gold, includes: preparing a gold simple substance by performing reduction from a concentrated gold solution obtained by the method of recovering the gold according to the invention.

### Advantageous Effects of Invention

According to the invention, it is possible to efficiently recover gold adsorbed on activated carbon at low cost.

### Brief Description of Drawings

Fig. 1 shows variations with time in concentration of gold in an eluent in Examples when sodium thiosulfate is added to the eluent at each pH and when the sodium thiosulfate is not added.
Fig. 2 shows variations with time in elution ratio calculated on the basis of a gold concentration in an eluent in Examples when gold is eluted at each temperature and sodium thiosulfate concentration at pH 4.
Fig. 3 shows variations Bed volume and grade of gold in Example 4.

### Description of Embodiments

In many cases, a slight amount of gold is included as a simple substance in metal sulfide ores such as chalcocite, bornite, covellite, chalcopyrite, pyrite, enargite, and arsenopyrite. Therefore, in order to recover gold, first, it is preferable that the metal sulfide ore is crushed and then made into concentrate by a flotation method for concentrating. In addition, when copper or iron, which is main metal components, is leached by 80% or greater from the concentrate using an acidic leachate and solid-liquid separation is then performed, it is also possible to further condense the gold in leached residue and the treatment efficiency becomes favorable.

As a method of leaching gold included in the metal sulfide ore or gold preferably concentrated in the above-described concentrate or leached residue after leaching of the main metal component, a leaching method using strong oxidizing acid such as aqua regia, a leaching method using cyanide, and the like are known, but any of them has a problem in environmental burden and stability. Particularly, leaching using cyanide is a method which is avoided since its usage is usually restricted due to high toxicity of the cyanide.

In leaching with strong oxidizing acid, the concentration of gold in the solution is small, it is necessary to concentrate the gold. However, there is no appropriate method for further concentrating of the dissolved gold, and when the gold is adsorbed on activated carbon which is a well-known adsorbent or an adsorbent such as functional resins, low stripping efficiency is pointed as a problem. If incineration were performed for every adsorbent, the cost significantly increases.

As the strong oxidizing acid, aqua regia and mixed acid of hydrogen peroxide with hydrochloric acid are known, but dissolution can also be performed with mixed acid of Lewis acid with halide ions which stabilize gold ions. Regarding the dissolution of gold, a ligand is important to stabilize gold ions, and halide ions and cyanide are generally known.

In the invention, gold adsorbed on activated carbon is efficiently recovered at low cost. That is, in the invention, first, gold is dissolved with a strong oxidizing leachate and adsorbed on activated carbon. As the activated carbon, there are various activated carbons such as coconut shell activated carbon and coke activated carbon, and it may be derived from any of raw materials. As a method of adsorbing the gold, a batch-type method in which activated carbon is added may be employed, or a gold leached solution may be allowed to continuously pass through an adsorption tower filled with activated carbon. The activated carbon on which the gold is sufficiently adsorbed is recovered and the gold is eluted using a thiosulfate ion-containing eluent prepared by adding thiosulfate to an acidic aqueous solution.

The concentration of the thiosulfate is preferably adjusted to not less than 0.1 mol/L. Further, the elution effect is saturated at the concentration of thiosulfate of 0.1 mol/L (100 mol times that of the gold). Accordingly, from a cost standpoint, the concentration of the thiosulfate is preferably adjusted to 0.01 to 1.0 mol/L. Needless to say, a necessary amount of thiosulfate varies with the amount of gold adsorbed on the activated carbon, but the gold is not lost even when the elution is insufficient as described above. When an excessive amount of thiosulfate is added, the surface of the activated carbon is covered with sulfur and the elution is inhibited. Accordingly, the practical concentration of thiosulfate is 0.01 to 0.5 mol/L. The thiosulfate includes at least one selected from sodium thiosulfate, thiosulfuric acid, and potassium thiosulfate.

The pH of the acidic aqueous solution which is used as an eluent is preferably 4 to 7. The thiosulfate is gradually decomposed into sulfurous acid (to be converted into sulfuric acid by air oxidation) and polysulfide by weak acid. Accordingly, using such a weakly-acidic eluent, the thiosulfate is favorably decomposed and polysulfide which promotes the elution of gold as described above is generated. In addition, since the eluent is weakly acidic, the stability in handling is improved and the cost is reduced.

The elution process is preferably performed using a batch-type reactor at an elution temperature of 20 to 100°C. In addition, the elution temperature is more preferably 60 to 85°C. The closer the elution temperature is to 100°C, the higher is the elution rate. When the elution temperature is 25°C, the elution rate is significantly reduced. However, since activated carbon is repeatedly used after the elution operation, the gold is not lost even when the elution of the gold is insufficient. The appropriate elution temperature is 60 to 85°C in consideration of energy cost and efficiency of temperature increase.

The thiosulfate ions are unstable under the acid condition and decomposed into sulfur and sulfurous acid as described in (Formula 1), and the sulfurous acid is finally converted into sulfuric acid. When a continuous water-passage method using an adsorption tower is used for the elution, there is a concern that clogging may occur due to the generated sulfur, and thus the elution is preferably performed using a batch-type reactor.

S₂O₃²⁻ ⇔ S + SO₃²⁻ → oxidation, hydrolysis → H₂SO₄ (Formula 1)

It is known that the thiosulfate ions also function as a ligand. However, in this description, it is thought that polysulfide which is generated as a reaction intermediate in the decomposition into sulfur and sulfurous acid in (Formula 1) promotes the elution of gold.

Polysulfide ions have a great influence on the elution and leaching of gold. Specifically, first, when gold included in metal sulfide ore is leached through the method of the invention, the gold in the solution is present as a polysulfide complex. Even when the complex is adsorbed on activated carbon, the complex is not reducted so it doesn't exist as metallic gold. Metallic gold is known as inactive material. It is thought that the absorbed gold polysulfide complex transform into the gold sulfide or the following form.

Au(HSₙH)ₘX

(wherein, X represents halogen, m represents an integer of 1 to 4, and n represents an integer of 1 to 9)

In the case of the former form (gold sulfide), it reacts with S²⁻ and is dissolved and thus eluted (Non Patent Literature 1). In the case of the latter form, the complex is negatively charged by reaction with H of hydrogen polysulfide ligand with NaOH and thus eluted.

(Non Patent Literature 1) Seishi Takagi, Qualitative Analytical Chemistry, Vol. II, Ion Reaction, Nankodo Co., Ltd.

As described above, since the polysulfide ions have a great influence on the elution and leaching of gold, the gold is eluted with decomposition of thiosulfate ions. However, when sulfur to be precipitated covers the surface of the activated carbon, the sulfur is preferably removed through an appropriate method. General examples thereof include a method of dissolving sulfur with strong alkali or an organic solvent and a method of causing physical peeling from an activated carbon surface by ultrasonic waves.

A concentrated gold solution may be obtained by elution from the activated carbon. Here, the "concentrated gold solution" means a solution including 50 to 5000 mg/L of gold. As a method of manufacturing metal gold by reduction from the concentrated solution, chemical reduction using sodium oxalate or sulfur dioxide, or a solvent extraction-electrowinning method are known and it is possible to obtain a metal gold using any means.

The activated carbon can be repeatedly used in adsorption of gold, and is advantageous in terms of cost.

### Examples

Hereinafter, Examples of the invention will be described. However, these Examples are provided in order to understand the invention and advantages thereof better and there is no intent to limit the invention.

### (Example 1)

Metal sulfide concentrate including gold (Cu: 17 mass%, Fe: 27 mass%, S: 25 mass%, Au: 90 ppm) was weighed to 35 g/L with respect to leachate. The leachate contained 180 g/L of Cl, 20 g/L of Br, 18 g/L of Cu, and 2 g/L of Fe and a pH thereof was 1.5. The leachate was heated to 85°C and stirring with air blown at 0.1 L/min. The resulting leachate with a gold concentration of 2 mg/L or greater obtained in this manner was allowed to pass through a column filled with activated carbon derived from coconut shell (Activated Carbon MC manufactured by Taihei Chemical Industrial Co., Ltd.) to adsorb the gold on the activated carbon. The activated carbon was taken out when the gold was appropriately adsorbed, and the gold concentration was quantitated. The result thereof was about 9000 g/ton. Concentrating by cupellation was performed, and then the gold concentration of dissolution in aqua regia was determined by ICP-AES.

Sodium thiosulfate was added at 0.5 mol/L (56 g/L of thiosulfate ions) to aqueous solutions the pH of which was respectively adjusted to 4, 8, and 12 by hydrochloric acid and sodium hydroxide, thereby preparing eluents. The activated carbon, to which the gold was adsorbed, was soaked in the eluents at a ratio of 20 g/L and stirred at 80°C to perform elution. Stripped gold concentration was determined by the method under below. 2 mL of hydrogen peroxide was added and a part of the solution was taken and diluted with hydrochloric acid. The solution was set to 100 mL, and then a supernatant was quantitated by ICP-AES.

### (Comparative Example 1)

Activated carbon prepared as in Example 1 was used with a dilute sulfuric acid of pH 4 as an eluent. The activated carbon was soaked in the eluent at a ratio of 20 g/L and stirred at 80°C.

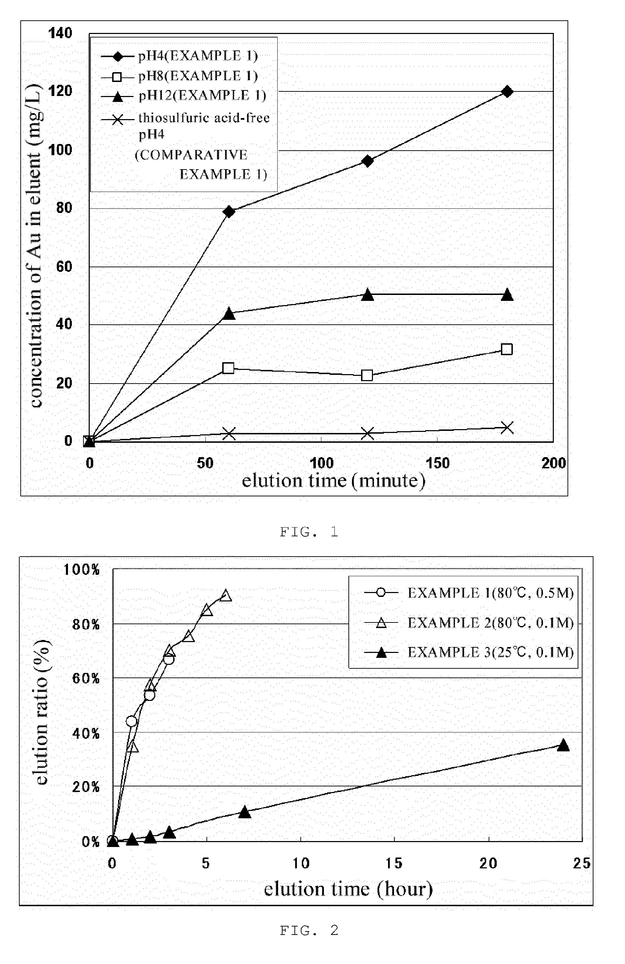

Variations with time in gold concentration in the eluent when the elution was performed in Example 1 and Comparative Example 1 provided in Fig. 1. It was found that when thiosulfate was added, the gold was eluted obviously efficiently and the most excellent effect was obtained when the eluent was weakly acidic (pH 4). Although the elution in a strong alkali range of pH 12 was greater than the elution in a neutral range of pH 8 in terms of efficiency, this result reflects the fact that the activated carbon adjusted in this method was leached even with strong alkali, and thus the effect of alkali was greater than the effect of adding thiosulfate.

### (Example 2)

Activated carbon prepared as in Example 1 was used and an eluent was prepared by adding sodium thiosulfate at 0.1 mol/L (11.2 g/L of thiosulfate ions). The pH of the eluent was 4. The activated carbon, on which the gold was adsorbed, was soaked in the eluent at a ratio of 20 g/L and stirred at 80°C to perform elution. Variations with time in elution ratio calculated on the basis of the gold concentration in the eluent are provided in Fig. 2.

### (Example 3)

Activated carbon prepared as in Example 1 was used and an eluent was prepared by adding sodium thiosulfate at 0.1 mol/L (11.2 g/L of thiosulfate ions). The pH of the eluent was 4. The activated carbon, to which the gold was adsorbed, was soaked in the eluent at a ratio of 20 g/L and stirred at 25°C to perform elution. Variations with time in gold concentration in the eluent are provided in Fig. 2.

From the results of Examples, the effect hardly varied at a concentration of sodium thiosulfate of 0.1 to 0.5 mol/L. However, when the temperature was 25°C, the elution rate was significantly reduced, but since the activated carbon was repeatedly used after the elution operation, the gold was not lost even when the elution of the gold was insufficient.

Since the highest gold concentration (when the gold adsorbed on the activated carbon was thought to be completely eluted) was 0.91 mmol/L, the thiosulfate at was added about 100 mol times. However, it was thought that the effect was not extremely reduced even when the thiosulfuric acid was 10 mol times, considering the reaction mechanism. Generally, polysulfide ions were divalent anions of about 2 to 6 sulfur atoms bonding together, and the thiosulfate was at most 12 mol times greater than that of gold even two molecules coordinated to one gold ion. Therefore, it was presumed that the effect was observed even when the thiosulfate was about 10 mol times.

The elution effect hardly varied at a concentration of thiosulfate of 0.1 to 0.5 mol/L. That is, the elution effect was saturated at the thiosulfate concentration of 0.1 mol/L (100 mol times that of the gold). Needless to say, a necessary amount of thiosulfate varied with the amount of gold adsorbed on the activated carbon, but the gold was not lost even when the elution was insufficient as described above.

### (Example 4)

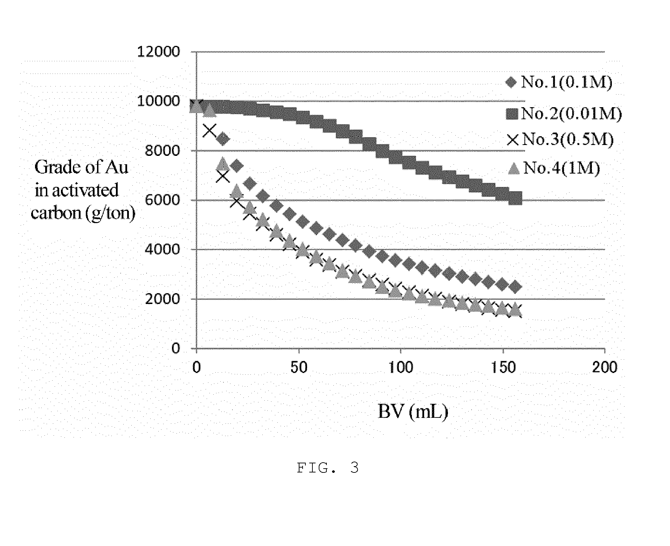

A stoppered glass column having inner diameter of 11 mm and height of 200 mm was filled with 19 mL of activated carbon (CC-202 manufactured by Taihei Chemical Industrial Co., Ltd.) adsorbing 9800g/ton of gold. The activated carbon was washed by HCl beforehand. Next, sodium thiosulfate was added to pure water to 0.01 mol/L, 0.1 mol/L, 0.5 mol/L or 1.0 mol/L, and then, the water was adjusted to pH 5 by sulfuric acid to prepare eluent. Next, the eluent was supplied into the column filled with activated carbon at 4.1 mL/minute, and then, post-eluting solution was separately collected by every 5 to 7 mL. Internal temperature of the column was kept at 70°C. In a condition of passing the eluent through the column, SV: Space velocity was 13 (1/hour), LV: Linear velocity was 2.6 (m/hour), BV: Bed volume was 156 (mL). Next, a concentration of gold in the separately collected solution was determined by ICP-AES, and then grade of gold in the activated carbon was calculated. Conditions of the above described test are shown in Table 1, a relationship between the obtained Bed volume and grade of gold in the activated carbon is shown in Table 2, and the variations is shown in FIG. 3.

**Table 1**

| Test No. | 1 | 2 | 3 | 4 |
|---|---|---|---|---|
| raw activated carbon | CC-202 | CC-202 | CC-202 | CC-202 |
| pre-treatment of activated carbon immersion before elution | wash with HCl pure water | wash with HCl pure water | wash with HCl pure water | wash with HCl pure water |
| treatment in the process of activated carbon elution | - | - | - | - |
| extrusion by pure water | - | - | - | - |
| concentration of Na2S2O3(M) | 0.1 | 0.01 | 0.5 | 1 |
| pre-eluting solution pH | 5 | 5 | 5 | 5 |
| inner temperature of column (°C) | 70 | 70 | 70 | 70 |
| height of column(mm) | 200 | 200 | 200 | 200 |
| volume of column ( mL ) | 19 | 19 | 19 | 19 |
| Bed flow volume ( mL/min) | 4.1 | 4.1 | 4.1 | 4.1 |
| SV : Space velocity ( 1/hour) | 13 | 13 | 13 | 13 |
| LV : Linear velocity(m/hour) | 2.6 | 2.6 | 2.6 | 2.6 |
| inner diameter of column(mm) | 11 | 11 | 11 | 11 |
| BV : Bed volume ( mL ) | 156 | 156 | 156 | 156 |
| concentration of Au in the solution upon termination(ppm) | 9.6 | 11.6 | 5.6 | 1.6 |
| grade of Au of activated carbon in pre-eluting solution(g/ton) | 9,800 | 9,800 | 9,800 | 9,800 |
| grade of Au of activated carbon in post-eluting solution(glton) | 2,500 | 6,100 | 1,500 | 1,600 |

### (Example 4)

**Table 2**

| | 1 | 2 | 3 | 4 |
|---|---|---|---|---|
| | 0.1M | 0.01M | 0.5M | 1M |
| BV: Bed volume (mL) | grade of Au in activated carbon calculated from concentration of Au in eluent and grade of Au after elution | | | |
| 0 | 9800 | 9800 | 9800 | 9800 |
| 7 | 9685 | 9789 | 8821 | 9634 |
| 13 | 8485 | 9774 | 6979 | 7478 |
| 20 | 7389 | 9751 | 5956 | 6384 |
| 26 | 6670 | 9713 | 5458 | 5736 |
| 33 | 6163 | 9643 | 5017 | 5216 |
| 39 | 5768 | 9553 | 4589 | 4756 |
| 46 | 5431 | 9491 | 4202 | 4361 |
| 52 | 5125 | 9350 | 3903 | 4011 |
| 59 | 4853 | 9187 | 3591 | 3723 |
| 65 | 4608 | 8999 | 3354 | 3447 |
| 72 | 4372 | 8788 | 3099 | 3157 |
| 78 | 4164 | 8560 | 2924 | 2921 |
| 85 | 3926 | 8278 | 2769 | 2714 |
| 91 | 3731 | 7994 | 2586 | 2508 |
| 98 | 3565 | 7764 | 2419 | 2351 |
| 104 | 3417 | 7541 | 2274 | 2228 |
| 111 | 3273 | 7328 | 2133 | 2116 |
| 117 | 3145 | 7131 | 2005 | 2013 |
| 124 | 3018 | 6934 | 1886 | 1936 |
| 130 | 2907 | 6754 | 1803 | 1856 |
| 137 | 2798 | 6584 | 1714 | 1782 |
| 143 | 2692 | 6419 | 1632 | 1718 |
| 150 | 2591 | 6257 | 1561 | 1659 |
| 156 | 2500 | 6100 | 1500 | 1600 |

## Claims

1. A method of recovering gold, the method comprising:
eluting gold adsorbed on activated carbon with an eluent prepared by adding thiosulfate to an acidic aqueous solution to obtain an acidic concentrated gold solution.

2. The method of recovering gold according to claim 1, wherein a pH of the acidic aqueous solution is 4 to 7.

3. The method of recovering gold according to claim 1 or 2, wherein the thiosulfate is a reductant including at least one selected from sodium thiosulfate, thiosulfuric acid, and potassium thiosulfate.

4. The method of recovering gold according to any one of claims 1 to 3, wherein a concentration of the thiosulfate in the eluent is not less than 0.01 mol/L.

5. The method of recovering gold according to claim 4, wherein a concentration of the thiosulfate in the eluent is 0.01 to 1.0 mol/L.

6. The method of recovering gold according to any one of claims 1 to 5, wherein the elution is performed at an elution temperature adjusted to 20 to 100°C.

7. The method of recovering gold according to any one of claims 1 to 6, wherein the elution temperature is adjusted to 60 to 85°C.

8. A method of manufacturing metal gold, the method comprising:
preparing a metal gold by reduction from a concentrated gold solution obtained by the method of recovering gold according to any one of claims 1 to 7.
